# EUROPEAN PATENT APPLICATION

(11) **EP 4 083 675 A1**
(43) Date of publication of application: **02.11.2022**
(21) Application number: 20904415.5
(22) Date of filing: 14.12.2020
(51) Int. Cl.: G02B 6/36, G02B 6/42

(54) **OPTICAL CONNECTOR MECHANISM AND OPTICAL CONNECTOR**

(30) Priority: 25.12.2019 JP 2019235128
(71) Applicant: YOKOWO CO., LTD., Kita-ku Tokyo 114-8515 (JP)
(72) Inventor: YODOGAWA, Akihiro, Tokyo 114-8515 (JP)
(74) Representative: Gunzelmann, Rainer
(86) International application number: PCT/JP2020/046477
(87) International publication number: WO 2021/131837

(57) **Abstract**

PROBLEM

The present invention provides a technique related to an optical connector mechanism capable of accurately connecting optical fibers, maintaining the connection, and achieving miniaturization.

SOLUTION

An optical connector mechanism 100 connects a first optical transmission and reception path including a fiber 10 and a second optical transmission and reception path including a fiber 20. The optical connector mechanism includes: an abutting portion 17 configured to apply a pressing force in an axial direction so as to cause an end surface of the first optical transmission and reception path and an end surface of the second optical transmission and reception path to abut against each other; a first case 14 configured to house the first optical transmission and reception path; a second case 25 configured to house the second optical transmission and reception path; a sleeve case 40 slidably attached to the first case; an elastic bar member 32 including one end portion fixed to the first case and another end portion configured to be inserted into the second case; an engagement portion 28, 38 configured to engage the other end portion of the elastic bar member with the second case; and an engagement releasing portion 35, 41 configured to press the elastic bar member so as to release the engagement performed by the engagement portion when the sleeve case slides.

## Description

### TECHNICAL FIELD

The present invention relates to a technique for an optical connector.

### BACKGROUND ART

Optical communication is a communication technique for executing transmission and reception with an optical signal transmitted via an optical fiber. In the optical communication, it is possible to execute communication at a large capacity, a high speed, and a long distance without being affected by electromagnetics.

A length of the optical fiber is finite, and it is necessary to connect the optical fibers to each other. It is necessary to connect the optical fiber and a transmission and reception device (specifically, an optical fiber in the device). Therefore, an optical connector mechanism has been proposed.

In the optical connector mechanism, it is necessary to accurately connect end surfaces of the optical fibers in order to minimize the loss. Further, a strong locking mechanism is required to maintain the connection between the end surfaces (for example, Patent Literature 1).

### CITATION LIST

### PATENT LITERATURE

Patent Literature 1: JP-A-5-093824

### SUMMARY OF INVENTION

### TECHNICAL PROBLEM

The optical communication has been widely used, and it is required to miniaturize the optical connector mechanism in order to mount the optical connector mechanism at a higher density. In particular, in the optical connector mechanism in the transmission and reception device, a part of the optical connector mechanism is mounted on a transmission and reception device side, but a sufficient mounting space may not be secured. When a plurality of optical connector mechanisms are mounted on the same device, a higher density is required.

An object of the present invention is to accurately connect end surfaces of optical fibers to each other in an optical connector mechanism, to maintain the connection between the end surfaces, and to further miniaturize the optical connector mechanism.

### SOLUTION TO PROBLEM

The present invention relates to an optical connector mechanism that connects a first optical transmission and reception path and a second optical transmission and reception path. The optical connector mechanism includes:
an abutting portion configured to apply a pressing force in an axial direction so as to cause an end surface of the first optical transmission and reception path and an end surface of the second optical transmission and reception path to abut against each other;
a first case configured to house the first optical transmission and reception path;
a second case configured to house the second optical transmission and reception path;
a sleeve case slidably attached to the first case;
an elastic bar member including one end portion fixed to the first case and another end portion configured to be inserted into the second case;
an engagement portion configured to engage the other end portion of the elastic bar member with the second case; and
an engagement releasing portion configured to press the elastic bar member so as to release an engagement by the engagement portion when the sleeve case slides.

### ADVANTAGEOUS EFFECTS OF INVENTION

According to the optical connector mechanism in the present invention, it is possible to accurately connect the end surfaces of the optical fibers to each other, to maintain the connection between the end surfaces, and to further miniaturize the optical connector mechanism.

### BRIEF DESCRIPTION OF DRAWINGS

[Fig. 1] Fig. 1 is a schematic configuration view of an optical connector mechanism.
[Fig. 2] Fig. 2 is a schematic configuration view of a plug (a connector).
[Fig. 3] Fig. 3 is a schematic configuration view of the plug (the connector).
[Fig. 4] Fig. 4 is a schematic configuration view of a receptacle.
[Fig. 5] Fig. 5 is a schematic configuration view showing a connection state between the plug and the receptacle.
[Fig. 6] Fig. 6 is an operation explanatory view showing a configuration and an engaged state of an engagement mechanism.
[Fig. 7] Fig. 7 is an explanatory view of an engagement releasing operation performed by a sleeve case.
[Fig. 8] Fig. 8 is an explanatory view of the engagement releasing operation performed by the sleeve case.
[Fig. 9] Fig. 9 is an explanatory view of a slide operation example.
[Fig. 10] Fig. 10 is a schematic configuration view of a plug (a connector) according to a modification.
[Fig. 11] Fig. 11 is a view showing an application example and a reference example of an optical connector mechanism according to an embodiment and the modification.
[Fig. 12] Fig. 12 is a view showing an implementation example and a reference example of a receptacle according to the embodiment and the modification.

### DESCRIPTION OF EMBODIMENTS

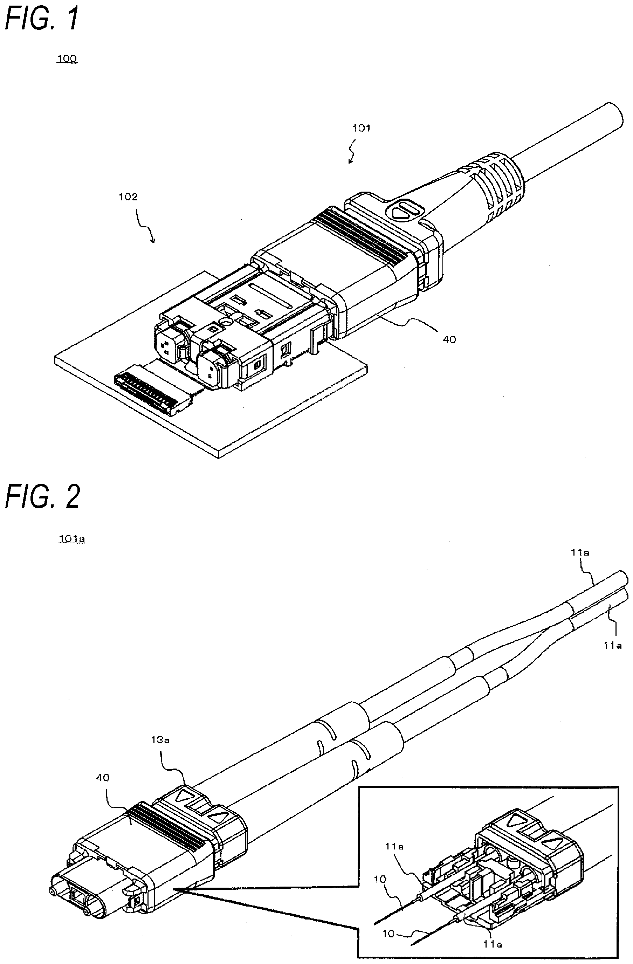

Hereinafter, a configuration of an optical connector mechanism according to an embodiment of the present invention will be described with reference to Figs. 1 to 5. Fig. 1 is a schematic configuration view of an optical connector mechanism 100.

The optical connector mechanism 100 includes a plug (a connector) 101 and a receptacle 102. The plug 101 on an insertion side is connected to the receptacle 102 on a receiving side, so that the optical connector mechanism 100 is formed. In the present embodiment, a plug side is a first optical fiber side, and a receptacle side is a second optical fiber side.

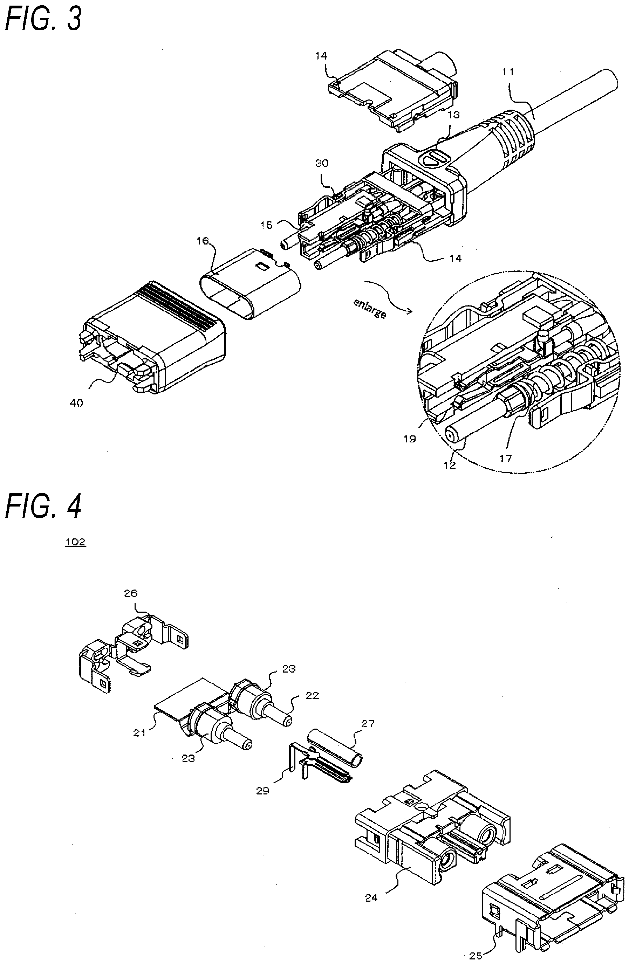

Figs. 2 and 3 are schematic configuration views of the plug 101 (101a). Although the details of the plug 101 and the plug 101a are different, the plug 101 and the plug 101a are substantially equivalent.

The plug 101 (101a) includes a cable 11 (11a), a plug side ferrule 12, an overmold 13 (13a), a plug side case 14, a plug housing 15, a plug shell 16, a spring 17, and a plug side electrical terminal 19.

For example, transmission and reception fibers 10 are housed in the plug 101 (101a). The transmission fiber 10 transmits light to the receptacle 102, and the reception fiber 10 receives light from the receptacle 102.

The fiber 10 is covered with the cable 11. One end portion of the fiber 10 is connected and fixed to the plug side ferrule 12. One end portion of the cable 11 (11a) is integrally molded with the overmold 13 (13a).

The plug side case 14 is connected to the overmold 13 (13a). The plug side case 14 can be divided, for example, into upper and lower cases. The plug side case 14 includes the plug side ferrule 12, the plug housing 15, the plug shell 16, and the like. The plug side case 14 is formed of, for example, resin.

The plug housing 15 includes the plug side ferrule 12. The plug shell 16 includes the plug housing 15. The plug shell 16 protrudes from the plug side case 14. As a result, one end surface of the plug side ferrule 12 is exposed toward the receptacle 102. The plug shell 16 is inserted into the receptacle 102.

The spring 17 is wound around the plug side ferrule 12.

The plug side electrical terminal 19 is exposed toward the receptacle 102. The plug side electrical terminal 19 is continuous with an electrical wire. The electrical wire is provided parallel to the fiber 10. The electrical wire is covered with the cable 11.

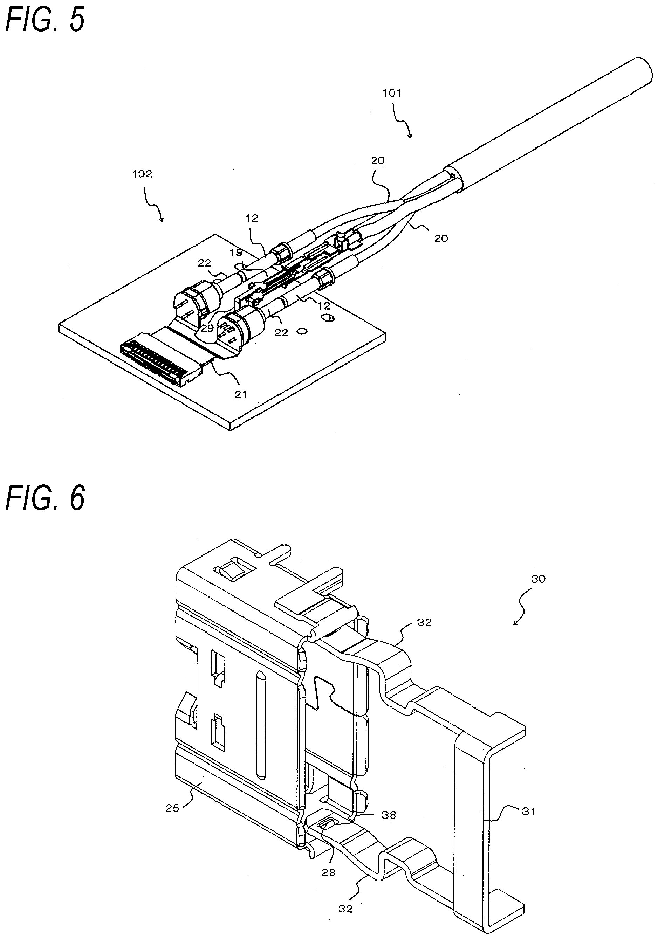

The plug 101 is provided with a U-shaped member 30 having a shape obtained by removing one side of a quadrangle, and a sleeve case 40. The U-shaped member 30 and the sleeve case 40 will be described in detail with reference to Figs. 6 to 9.

Fig. 4 is a schematic configuration view of the receptacle 102.

The receptacle 102 is generally mounted in an electronic device housing.

The receptacle 102 includes a flexible printed circuit board (FPC) 21, a receptacle side ferrule 22, transmission and reception optical subassemblies 23, a reception housing 24, a reception housing shell 25, a TO cap 26, and a receptacle side electrical terminal 29. The transmission optical subassembly 23 transmits light to the plug 101, and the reception optical subassembly 23 receives light from the plug 101.

The FPC 21 is mounted on an electronic device. A fiber core wire portion of the fiber 20 (see Fig. 5) is covered with the plug side ferrule 12 and the receptacle side ferrule 22. The optical subassembly 23 is interposed between the fiber 20 and the FPC 21, and converts an optical signal and an electrical signal.

The reception housing 24 includes the receptacle side ferrule 22. The reception housing shell 25 includes the reception housing 24. One end surface of the receptacle side ferrule 22 is exposed toward the plug 101. The reception housing shell 25 functions as a case.

The receptacle side electrical terminal 29 is exposed toward the plug 101. The receptacle side electrical terminal 29 is connected to the FPC 21 via an electrical wire.

Fig. 5 is a schematic configuration view showing a connection state between the plug 101 and the receptacle 102.

A split sleeve 27 (see Fig. 4) couples the plug side ferrule 12 and the receptacle side ferrule 22. An end surface of the plug side ferrule 12 and an end surface of the receptacle side ferrule 22 abut against each other, so that an optical axis of the fiber 10 and an optical axis of the fiber 20 coincide with each other. Accordingly, the optical signal can be transmitted.

The spring 17 (see Fig. 3) urges the plug side ferrule 12 in an axial direction, and the one end surface of the plug side ferrule 12 presses one end surface of the receptacle side ferrule 22. Accordingly, a contact state is reliably maintained.

The plug side electrical terminal 19 and the receptacle side electrical terminal 29 are connected to each other, and the electrical signal can be transmitted.

Hereinafter, an operation of the optical connector mechanism according to the embodiment of the present invention will be described with reference to the drawings. Fig. 6 is an operation explanatory view showing a configuration and an engaged state of an engagement mechanism.

The U-shaped member 30 includes a fixing portion 31 fixed to the plug side case 14 and elastic bar members 32 extending from both ends of the fixing portion 31. One end portion of the elastic bar member 32 is fixed to the plug side case 14. The other end portion of the elastic bar member 32 is a free end and is inserted into the reception housing shell 25 (a case). An engaging hole 38 is formed at the other end portion of the elastic bar member 32. A claw portion 28 is provided on an inner wall of the reception housing shell 25 (the case).

The engaging hole 38 and the claw portion 28 correspond to each other. The claw portion 28 is fitted into the engaging hole 38 in a state in which an elastic force generated by the elastic bar member 32 is applied, so that the claw portion 28 and the engaging hole 38 are brought into an engaged state (a locked state).

As a modification of the engagement mechanism, the claw portion 28 may be provided on the other end portion of the elastic bar member 32, and the engaging hole 38 may be formed in a wall of the reception housing shell 25 (the case).

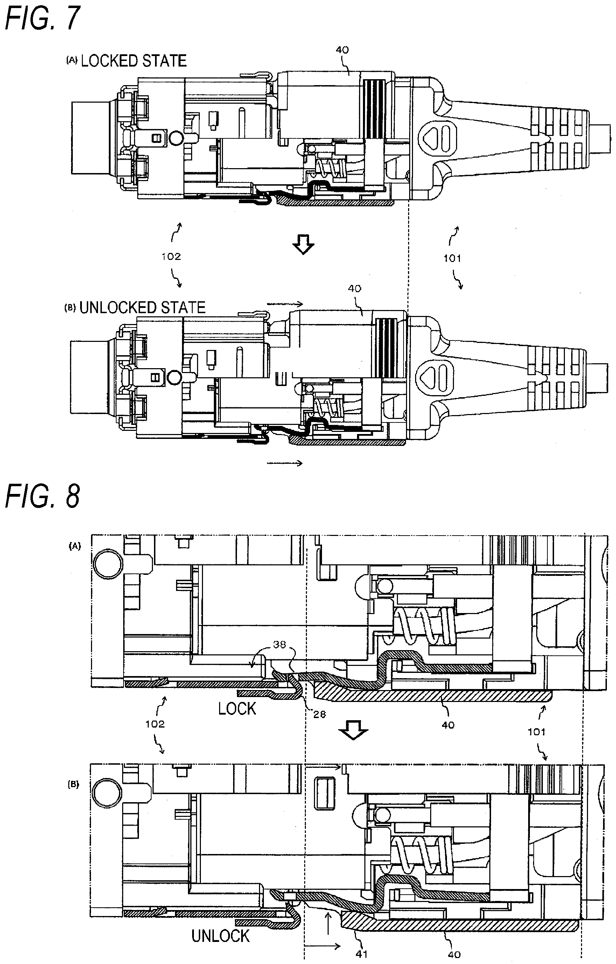

Figs. 7 to 9 are explanatory views of an engagement releasing operation performed by the sleeve case 40. Fig. 7 is an overall view of the optical connector mechanism, and shows an appearance and an internal structure at the same time. (A) and (B) of Fig. 8 are detailed views of main parts of the optical connector mechanism shown in (A) and (B) of Fig. 7, respectively.

The sleeve case 40 is formed in a sleeve shape. The sleeve case 40 is slidably attached to the plug side case 14. A protrusion 41 is provided on an inner wall of the sleeve case 40 and on a side facing the receptacle 102.

(A) of Fig. 7 and (A) of Fig. 8 are views showing the engaged state (the locked state). The sleeve case 40 is located close to the receptacle 102. (B) of Fig. 7 and (B) of Fig. 8 are views showing an engagement releasing state (an unlocked state). The sleeve case 40 is located away from the receptacle 102. The sleeve case 40 is slidable from a position close to the receptacle 102 to a position away from the receptacle 102, and is also slidable from a position far from the receptacle 102 to a position close to the receptacle 102.

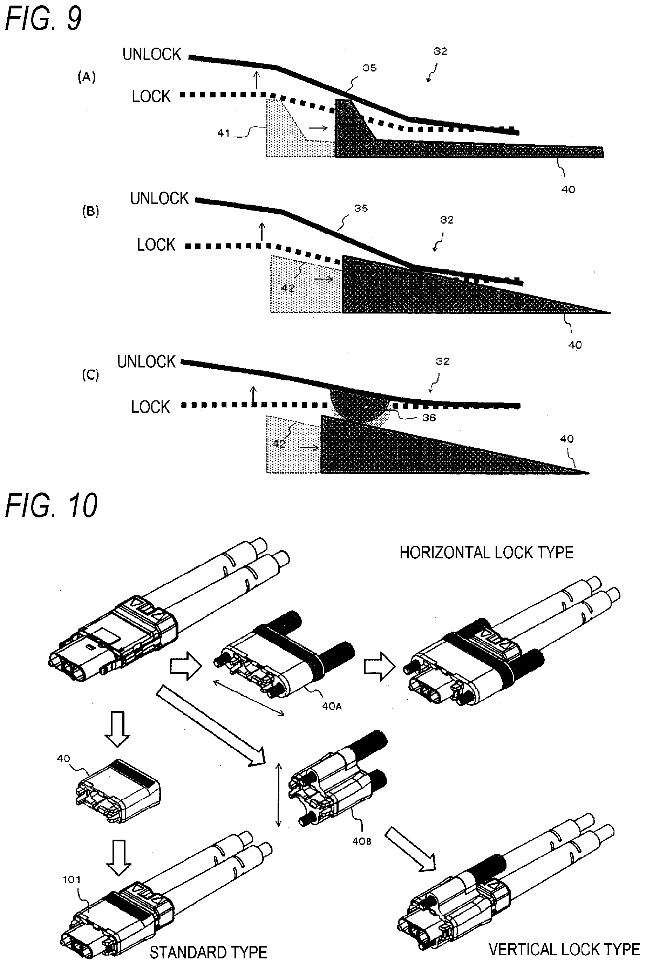

Fig. 9 is an explanatory view of a slide operation example. (A) of Fig. 9 is a view schematically showing an operation of the optical connector mechanism disclosed with reference to Figs. 7 and 8.

An inclined portion 35 is provided in the middle of the elastic bar member 32. The inclined portion 35 is provided obliquely with respect to a sliding direction of the sleeve case 40. In an example in (A) of Fig. 9, the inclined portion 35 is inclined in a manner of approaching the inner wall of the sleeve case 40 as a distance from the receptacle 102 increases.

In the engaged state (the locked state), the protrusion 41 of the sleeve case 40 abuts against the inclined portion 35 of the elastic bar member 32 at a position close to the receptacle 102. An elastic force generated by the elastic bar member 32 acts on the protrusion 41, so that the protrusion 41 is maintained at the position. As a result, the claw portion 28 is fitted into the engaging hole 38, so that the claw portion 28 and the engaging hole 38 are brought into the engaged state (the locked state) (see Fig. 6).

Next, the sleeve case 40 is slid to an engagement releasing position. The protrusion 41 slides on the inclined portion 35 while abutting against the inclined portion 35. The elastic bar member 32 is displaced away from the inner wall of the reception housing shell 25 (the case) against the elastic force generated by the elastic bar member 32. As a result, the engaging hole 38 is separated from the claw portion 28, and the engaging hole 38 and the claw portion 28 are brought into the engagement releasing state (the unlocked state). An engagement releasing mechanism (a slide mechanism) is formed by the inclined portion 35 and the protrusion 41.

When the plug (the connector) 101 and the receptacle 102 are connected, a slide operation of the sleeve case 40 is released. By the elastic force generated by the elastic bar member 32, the protrusion 41 slides toward the plug (the connector) 101 on the inclined portion 35 while abutting against the inclined portion 35, and is brought into an engageable state (a lockable state). If the plug is inserted in the engageable state, one end surface of the plug side ferrule 12 and one end surface of the receptacle side ferrule 22 abut against each other, the claw portion 28 described above is fitted into the engaging hole 38, and the claw portion 28 and the engaging hole 38 are brought into the engaged state (the locked state).

(B) of Fig. 9 is a modification of the slide mechanism. The inclined portion 35 is provided in the middle of the elastic bar member 32. On the other hand, an inclined portion 42 is also provided on the inner wall of the sleeve case 40. In the example in (B) of Fig. 9, the inner wall of the sleeve case 40 is inclined in a manner of approaching an outer wall as the distance from the receptacle 102 increases.

In the engaged state (the locked state), the inclined portion 35 and the inclined portion 42 abut against each other. If the sleeve case 40 is slid toward the engagement releasing position, the inclined portion 35 is displaced in a direction away from the inclined portion 42, and the engagement releasing state (the unlocked state) is established.

(C) of Fig. 9 is another modification of the slide mechanism. The elastic bar member 32 is parallel to the sliding direction. A protrusion 36 is provided in the middle of the elastic bar member 32. The inclined portion 42 is provided on the inner wall of the sleeve case 40.

In the engaged state (the locked state), the protrusion 36 abuts against the inclined portion 42 at a position far from the receptacle 102. The elastic force generated by the elastic bar member 32 acts on the protrusion 36, so that the protrusion 36 is maintained at the position.

If the sleeve case 40 is slid to the engagement releasing position, the protrusion 36 slides on the inclined portion 42 while abutting against the inclined portion 42. The elastic bar member 32 is displaced away from the inner wall of the reception housing shell 25 (the case) against the elastic force generated by the elastic bar member 32, and the engagement releasing state (the unlocked state) is established.

The spring 17 is wound around the plug side ferrule 12. The spring 17 urges the plug side ferrule 12 in the axial direction. By an urging force of the spring 17, a state is reliably maintained in which one end surface of the plug side ferrule 12 and one end surface of the receptacle side ferrule 22 (that is, the end surface of the fiber 10 and the end surface of the fiber 20) abut against each other.

When the plug 101 and the receptacle 102 are connected, if the plug 101 is pushed into the receptacle 102 for a predetermined length, the engaging hole 38 moves to a position corresponding to the claw portion 28. The engaging hole 38 and the claw 28 are in the engaged state (the locked state). The slide of the sleeve case 40 is in a released state, and an appropriate amount of pressing force is generated. The pressing force is required to conform to a standard value of the IEC standard.

In the engaged state (the locked state), an axial force acts between the claw portion 28 and the engaging hole 38 by the urging force generated by the spring 17. The engaged state (the locked state) between the claw portion 28 and the engaging hole 38 becomes more reliable. Even if an unexpected force acts on the claw portion 28 or the engaging hole 38, the engaged state between the claw portion 28 and the engaging hole 38 is not likely to be released.

When the sleeve case 40 is slid to the engagement releasing position and the engagement releasing state (the unlocked state) is established, the connection between the plug (the connector) 101 and the receptacle 102 is also released by a reaction force generated by the spring 17. By only sliding the sleeve case 40 by applying a small force, it is possible to easily release the connection between the plug (the connector) 101 and the receptacle 102.

Hereinafter, a modification of the present invention will be described. Fig. 10 is a schematic configuration view of a plug (a connector) according to a modification. The above-described embodiment is also described so as to facilitate understanding of the points to be changed from the above-described embodiment. The configuration other than the sleeve case 40 is the same as that according to the above-described embodiment.

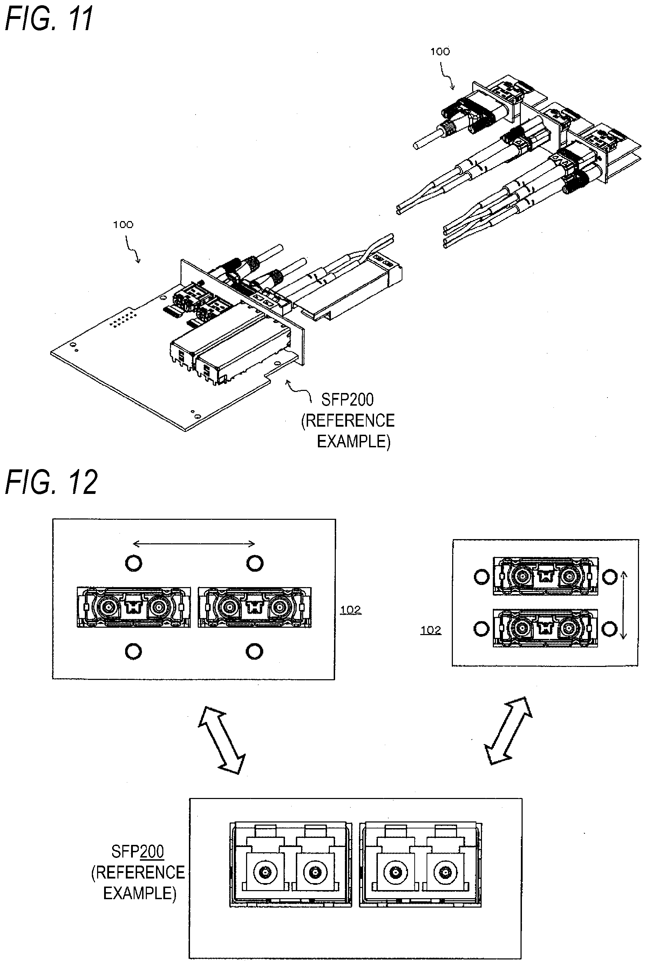

A sleeve case 40A has screw coupling holes at left and right sides (both ends in a width direction) of the sleeve case 40. The width direction is a direction in which the transmission optical subassembly 23 and the reception optical subassembly 23 are arranged. On the other hand, the receptacle 102 is also formed with screw coupling holes corresponding to the screw coupling holes of the sleeve case 40A (see Fig. 12).

The sleeve case 40B has screw coupling holes at upper and lower sides (both ends in a vertical direction) of the sleeve case 40. The vertical direction is a direction orthogonal to the width direction and the axial direction. On the other hand, the receptacle 102 is also formed with screw coupling holes corresponding to the screw coupling holes of the sleeve case 40B (see Fig. 12).

In addition to the engagement formed by the engaging hole 38 and the claw portion 28, the plug 101 and the receptacle 102 are more reliably connected to each other by the coupling with the screw coupling holes by a screw coupling member.

Fig. 11 is a view showing an application example of the optical connector mechanism 100 according to the embodiment and the modification described above. A transmission device and a reception device are connected to each other via the optical connector mechanism 100 and an optical fiber. Fig. 12 is a view showing an implementation example of the receptacle 102 according to the embodiment and the modification described above.

The optical connector mechanism 100 including the slide mechanism is small in size. Even when the optical connector mechanism 100 having screw coupling at both ends in the vertical direction is provided along the width direction, it is possible to maintain space saving. Even when the optical connector mechanism 100 having screw coupling at both ends in the width direction is provided along the vertical direction, it is possible to maintain space saving.

The embodiment or the modification described above may be appropriately selected and provided corresponding to a mounting space on the device side. The configuration other than the sleeve case is the same, and an appropriate sleeve case may be selected.

Reference examples are also shown in Figs. 11 and 12. As a general miniaturized optical connector mechanism, an SFP (Small Form Factor Pluggable) is used. The optical connector mechanism 100 according to the present embodiment is smaller in size than an optical connector mechanism 200 according to the reference example. Therefore, the optical connector mechanism 100 can also be used in a case in which the mounting space on the device side is limited.

When a plurality of optical fibers are present, an effect of miniaturization is also achieved.

In the above-described embodiment and the like, it is assumed that the receptacle 102 is mounted in an electronic device housing. Alternatively, an optical connector mechanism that connects cables to each other may be used.

As described above, the present invention may have the following aspects.

An aspect of the present invention provides an optical connector mechanism that connects a first optical transmission and reception path and a second optical transmission and reception path. The optical connector mechanism includes:
an abutting portion that applies a pressing force in an axial direction so as to cause an end surface of the first optical transmission and reception path and an end surface of the second optical transmission and reception path to abut against each other;
a first case that houses the first optical transmission and reception path;
a second case that houses the second optical transmission and reception path;
a sleeve case that is slidably attached to the first case;
an elastic bar member including one end portion fixed to the first case and another end portion that is to be inserted into the second case;
an engagement portion that engages the other end portion of the elastic bar member with the second case; and
an engagement releasing portion that presses the elastic bar member so as to release the engagement performed by the engagement portion when the sleeve case slides.

When the sleeve case is not operated, an engaged state is maintained. The engaged state is released as the sleeve case slides. Since the configuration is simple, miniaturization can be achieved.

In the above-described aspect, preferably, the engagement portion is an engaging hole formed in the other end of the elastic bar member or in the second case, and a claw portion provided corresponding to the engaging hole in the second case or in the other end portion of the elastic bar member.

The engaged state can be maintained by an engagement mechanism including the engaging hole and the claw portion.

In the above-described aspect, preferably, the abutting portion is a spring, and the abutting portion generates a predetermined pressing force when the spring contracts until the other end portion of the elastic bar member moves to a position to engage with the second case.

Accordingly, the abutting portion is operated in conjunction with the engagement portion. The abutting portion is operated in conjunction with the engagement releasing portion.

In the above-described aspect, preferably, the engagement releasing portion is an inclined portion provided on at least one of the elastic bar member and an inner wall of the sleeve case, and the inclined portion is provided obliquely with respect to a sliding direction of the sleeve case.

The inclined portion displaces the elastic bar member when the sleeve case slides. Accordingly, the engaged state is released.

In the above-described aspect, preferably, both ends of the sleeve case in a width direction have screw coupling holes, and the optical connector mechanism further includes a coupling portion that couples the second case and the sleeve case via the screw coupling holes.

In the above-described aspect, preferably, both ends of the sleeve case in a vertical direction have screw coupling holes, and the optical connector mechanism further includes a coupling portion that couples the second case and the sleeve case via the screw coupling holes.

By the coupling performed by a screw coupling member, the connection between the first optical transmission and reception path and the second optical transmission and reception path is ensured. The effect of miniaturization is also maintained.

In the above-described aspect, preferably, the second case is mounted in an electronic device housing.

The present invention can also be applied to a case in which a mounting space is severe as an electronic device is miniaturized.

Another aspect of the present invention provides an optical connector (a plug) constituting the above-described optical connector mechanism. The optical connector is an optical connector that is detachably engaged with a second case housing a second optical transmission and reception path. The optical connector includes:
a first case that houses a first optical transmission and reception path connected to the second optical transmission and reception path;
an abutting portion that applies a pressing force in an axial direction so as to cause an end surface of the first optical transmission and reception path and an end surface of the second optical transmission and reception path to abut against each other;
a sleeve case that is slidably attached to the first case;
an elastic bar member including one end portion fixed to the first case and another end portion that is to be inserted into the second case; and
an engagement portion that engages the other end portion of the elastic bar member with the second case.

### REFERENCE SIGNS LIST

- 10: optical fiber (first optical fiber)
- 11: cable
- 12: plug side ferrule
- 13: overmold
- 14: plug side case
- 15: plug housing
- 16: plug shell
- 17: spring
- 19: plug side electrical terminal
- 20: optical fiber (second optical fiber)
- 21: FPC
- 22: receptacle side ferrule
- 23: optical subassembly
- 24: reception housing
- 25: reception housing shell (case)
- 26: TO cap
- 28: claw portion
- 29: receptacle side electrical terminal
- 30: U-shaped member
- 31: fixing portion
- 32: elastic bar member
- 35: inclined portion
- 36: protrusion
- 38: engaging hole
- 40: sleeve case
- 41: protrusion
- 42: inclined portion
- 100: optical connector mechanism
- 101: plug (connector)
- 102: receptacle
- 200: optical connector mechanism (reference example)

## Claims

1. An optical connector mechanism that connects a first optical transmission and reception path and a second optical transmission and reception path, the optical connector mechanism comprising:
an abutting portion configured to apply a pressing force in an axial direction so as to cause an end surface of the first optical transmission and reception path and an end surface of the second optical transmission and reception path to abut against each other;
a first case configured to house the first optical transmission and reception path;
a second case configured to house the second optical transmission and reception path;
a sleeve case slidably attached to the first case;
an elastic bar member including one end portion fixed to the first case and another end portion configured to be inserted into the second case;
an engagement portion configured to engage the other end portion of the elastic bar member with the second case; and
an engagement releasing portion configured to press the elastic bar member so as to release an engagement by the engagement portion when the sleeve case slides.

2. The optical connector mechanism according to claim 1, wherein
the engagement portion is an engaging hole formed in the other end of the elastic bar member or in the second case, and a claw portion provided corresponding to the engaging hole in the second case or in the other end portion of the elastic bar member.

3. The optical connector mechanism according to claim 1 or 2, wherein
the abutting portion is a spring, and
the abutting portion is configured to generate a predetermined pressing force, when the spring contracts such that the other end portion of the elastic bar member moves to a position to engage with the second case.

4. The optical connector mechanism according to any one of claims 1 to 3, wherein
the engagement releasing portion is an inclined portion provided on at least one of the elastic bar member and an inner wall of the sleeve case, and
the inclined portion is provided obliquely with respect to a sliding direction of the sleeve case.

5. The optical connector mechanism according to any one of claims 1 to 4, wherein
both ends of the sleeve case in a width direction have screw coupling holes, and
the optical connector mechanism further comprises a coupling portion that couples the second case and the sleeve case via the screw coupling holes.

6. The optical connector mechanism according to any one of claims 1 to 4, wherein
both ends of the sleeve case in a vertical direction have screw coupling holes, and
the optical connector mechanism further comprises a coupling portion that couples the second case and the sleeve case via the screw coupling holes.

7. The optical connector mechanism according to any one of claims 1 to 6, wherein
the second case is mounted in an electronic device housing.

8. An optical connector that is detachably engaged with a second case housing a second optical transmission and reception path, the optical connector comprising:
a first case configured to house a first optical transmission and reception path connected to the second optical transmission and reception path;
an abutting portion configured to apply a pressing force in an axial direction so as to cause an end surface of the first optical transmission and reception path and an end surface of the second optical transmission and reception path to abut against each other;
a sleeve case slidably attached to the first case;
an elastic bar member including one end portion fixed to the first case and another end portion configured to be inserted into the second case; and
an engagement portion configured to engage the other end portion of the elastic bar member with the second case.
